# EUROPÄISCHE PATENTANMELDUNG

(11) **EP 1 150 394 A2**
(43) Veröffentlichungstag der Anmeldung: **31.10.2001**
(21) Anmeldenummer: 01104469.0
(22) Anmeldetag: 28.02.2001
(51) Int. Cl.: H01R 13/631, B60Q 5/00

(54) **Lenkrad**

(30) Priorität: 19.04.2000 DE 2007239 U
(71) Anmelder: TRW Automotive Safety Systems GmbH & Co. KG, 63743 Aschaffenburg (DE)
(72) Erfinder: Frisch, Ralph, 63776 Mömbris (DE)
(74) Vertreter: Sties, Jochen, Dipl.-Ing.

(57) **Zusammenfassung**

Ein Lenkrad (10) mit einem Steckverbinder (40), der dafür vorgesehen ist, in einen komplementären Steckverbinder (42) eingesteckt zu werden, um ein am Lenkrad angebrachtes Bauteil anzuschließen, ist dadurch gekennzeichnet, daß ein bistabiles Federelement (50) vorgesehen ist, das sich ausgehend vom Lenkrad zum Steckverbinder (40) erstreckt, wobei das Federelement (50) eine erste stabile Stellung einnehmen kann, in welcher es den Steckverbinder in eine Montagestellung beaufschlagt, und eine zweite stabile Stellung einnehmen kann, in der es den Steckverbinder (40) von dem komplementären Steckverbinder weg beaufschlagt, und daß der Steckverbinder (40) in Steckrichtung verschiebbar am Lenkrad angebracht ist.

## Beschreibung

Die Erfindung betrifft ein Lenkrad mit einem Steckverbinder, der dafür vorgesehen ist, in einen komplementären Steckverbinder eingesteckt zu werden, um ein am Lenkrad angebrachtes Bauteil anzuschließen.

Ein solches Lenkrad ist aus dem deutschen Gebrauchsmuster 299 17 129 bekannt. Die vom Steckverbinder am Lenkrad und dem komplementären Steckverbinder, der am Fahrzeug angebracht ist, ausgebildete Steckverbindung dient dazu, beispielsweise den Zünder eines Gasgenerators für ein Airbag-System anzuschließen. Der Steckverbinder am Lenkrad ist dabei so ausgestaltet, daß er bei der Montage des Lenkrades am Fahrzeug automatisch in den komplementären Steckverbinder eingesteckt wird. Weiterhin ist der Steckverbinder am Lenkrad geringfügig verschiebbar angebracht, so daß bei einer Drehung des Lenkrades ein Toleranzausgleich möglich ist. Der am Lenkrad angebrachte Steckverbinder und der komplementäre, am Fahrzeug angebrachte Steckverbinder drehen sich zwar theoretisch um dieselbe Achse, nämlich die Mittelachse der Lenkwelle; schon geringfügige Toleranzen führen jedoch dazu, daß die Bewegungsbahnen der beiden Steckverbinder nicht vollständig konzentrisch sind.

Als nachteilig hat sich jedoch herausgestellt, daß die zum Einstecken des am Lenkrad angebrachten Steckverbinders in den komplementären, am Fahrzeug angebrachten Steckverbinder dazu führen, daß der am Lenkrad angebrachte Steckverbinder mit einer Restkraft beaufschlagt bleibt, welche die freie Verschiebbarkeit des Steckverbinders am Lenkrad beeinträchtigt.

Die Aufgabe der Erfindung besteht somit darin, ein Lenkrad der eingangs genannten Art dahingehend weiterzubilden, daß die freie Verschiebbarkeit des Steckverbinders am Lenkrad nach der Montage gewährleistet ist.

Zu diesem Zweck ist ein Lenkrad der eingangs genannten Art vorgesehen, das dadurch gekennzeichnet ist, daß ein bistabiles Federelement vorgesehen ist, das sich ausgehend vom Lenkrad zum Steckverbinder erstreckt, wobei das Federelement eine erste stabile Stellung einnehmen kann, in welcher es den Steckverbinder in eine Montagestellung beaufschlagt, und eine zweite stabile Stellung einnehmen kann, in der es den Steckverbinder von dem komplementären Steckverbinder weg beaufschlagt, und daß der Steckverbinder in Steckrichtung verschiebbar am Lenkrad angebracht ist. Das Federelement schnappt bei der Montage des Lenkrades am Fahrzeug von der ersten stabilen Stellung in die zweite stabile Stellung um, so daß es auf den Steckverbinder eine Kraft ausübt, die der bei der Montage wirkenden Steckkraft entgegenwirkt. Auf diese Weise wird die mechanische Verspannung des Steckverbinders, die aus der Steckkraft resultiert, aufgehoben, und der Steckverbinder kann reibungsfrei am Lenkrad verschoben werden, wenn dieses gedreht wird.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 in einer teilgeschnittenen Ansicht ein Lenkrad gemäß dem Stand der Technik;
- Figur 2 in einer schematischen Ansicht einen Teil eines erfindungsgemäßen Lenkrades mit dem Steckverbinder in einer Montagestellung;
- Figur 3 eine Ansicht entsprechend derjenigen von Figur 2 mit dem Lenkrad während der Montage; und
- Figur 4 eine Ansicht entsprechend derjenigen von Figur 2 bei beendeter Montage des Lenkrades.

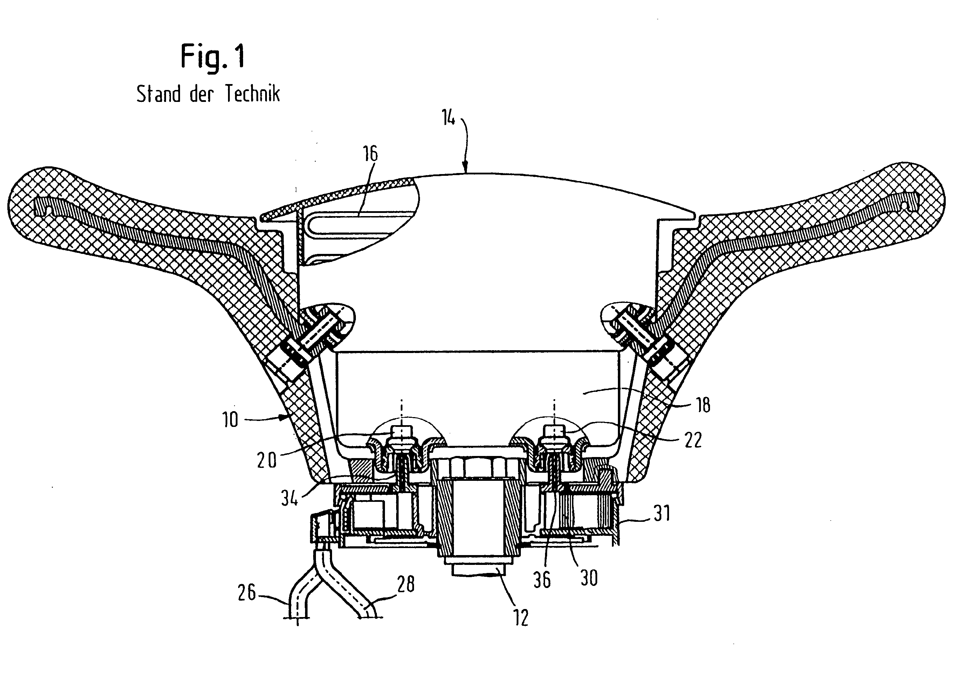

In Figur 1 ist ein Fahrzeuglenkrad 10 zu sehen, das mit einer Lenkwelle 12 verbunden ist. Das Lenkrad weist ein Gassack-Modul 14 auf, das im wesentlichen aus einem Gassack 16 und einem Gasgenerator 18 besteht. Der Gasgenerator 18 ist hier ein Zweikammer-Gasgenerator mit einem ersten Zünder 20 für die erste Kammer und einem zweiten Zünder 22 für die zweite Kammer. Die Zünder 20, 22 dienen dazu, eine in den Kammern angeordnete, gaserzeugende Ladung zu zünden.

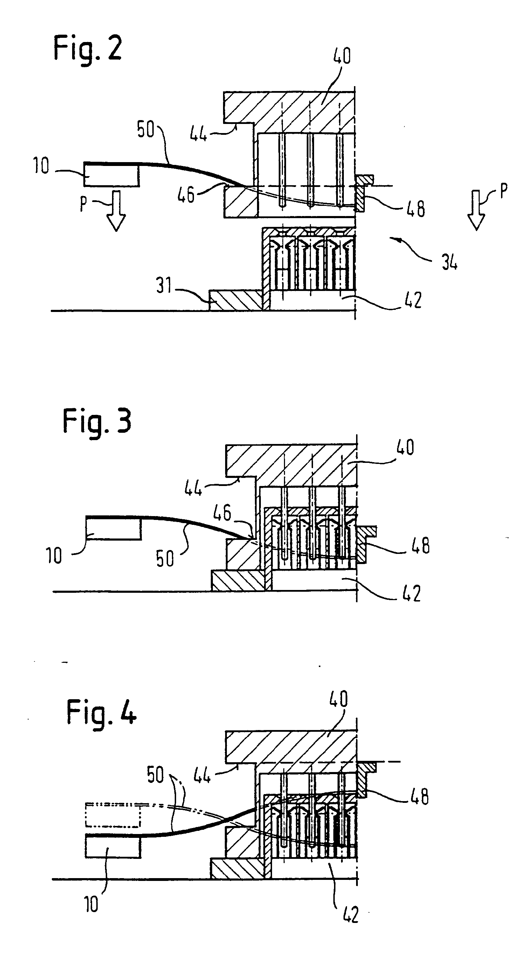

Zur Kontaktierung der beiden Zünder 20, 22 sind fahrzeugseitig zwei Leitungen 26, 28 vorgesehen. Sie sind jeweils mit einem spiralförmig gewickelten, mehrpoligen Flachbandleiterkabel 30 verbunden, das eine elektrische Verbindung zwischen einem feststehenden, an einem Fahrzeugteil 31 angebrachten Anschluß für die Leitungen 26, 28 und am Lenkrad vorgesehenen und sich somit mitdrehenden Steckverbindungen 34, 36 für die Zünder 20, 22 darstellt. Die Ausgestaltung der Steckverbindungen 34, 36 wird nachfolgend unter Bezugnahme auf Figur 2 im Detail erläutert.

In Figur 2 ist in vergrößerter, schematischer Ansicht die Steckverbindung 34 gezeigt. Diese besteht aus einem Steckverbinder 40, der am Lenkrad 10 angebracht ist, sowie einem komplementären Steckverbinder 42, der an einem Fahrzeugteil 31 angebracht ist. Der am Lenkrad 10 angebrachte Steckverbinder 40 weist zwei Anschläge 44, 46 auf, zwischen denen verschiebbar eine Verschiebehülse 48 angebracht ist. An der Verschiebehülse greift ein bistabiles Federelement 50 an, das hier als Blattfeder ausgebildet ist. Die Blattfeder 50 erstreckt sich von der Verschiebehülse 48 hin zum Lenkrad 10, an dem sie mit ihrem entsprechenden Ende eingespannt ist. In Figur 2 ist die Blattfeder 50 in einer ersten stabilen Stellung gezeigt, in der sie den Steckverbinder 40 in einer Montagestellung hält und in der sie die Verschiebehülse 48 gegen den Anschlag 46 beaufschlagt.

Wenn nun das Lenkrad 10 am Fahrzeug montiert wird, wird es in der Richtung des Pfeils P auf die Lenkwelle 12 aufgesetzt. Dabei gelangt der am Lenkrad angebrachte Steckverbinder 40 gegenüber dem komplementären Steckverbinder 42 und wird in diesen eingeschoben. Die dazu erforderliche Steckkraft ist kleiner als die Kraft, die zum Überführen der Blattfeder 50 aus ihrer ersten stabilen Stellung über einen Totpunkt hinaus in die zweite stabile Stellung erforderlich wäre. Somit wird der Steckverbinder 40 vom Lenkrad 10 über die Blattfeder 50, die Verschiebehülse 48 und den Anschlag 46 in den komplementären, am Fahrzeug angebrachten Steckverbinder 42 eingesteckt. Dieser Zustand ist in Figur 3 gezeigt. Wichtig ist, daß die beiden Steckverbinder vollständig ineinander eingesteckt sind, bevor das Lenkrad 10 vollständig auf die Lenkwelle 12 aufgeschoben ist. Dies führt dazu, daß die Blattfeder 50 beim weiteren Aufschieben, nachdem der Steckverbinder 40 vollständig in den komplementären Steckverbinder 42 eingeschoben wurde, über ihren Totpunkt hinwegbewegt wird und in ihre zweite stabile Stellung umschnappt, die in Figur 4 gezeigt ist. Durch das Umschnappen der Blattfeder 50 gelangt die Verschiebehülse 48 aus ihrer Stellung in Anlage am Anschlag 46 in eine Stellung, in der sie am Anschlag 44 anliegt, also auf der vom komplementären, am Fahrzeug angebrachten Steckverbinder 42 abgewandten Seite. Zur Verdeutlichung des Umschnappens ist in Figur 4 die mit durchgehenden Linien gezeichnete Stellung, die einem vollständig montierten Lenkrad entspricht, der gestrichelt gezeigten Stellung während der Montage gegenübergestellt, in der die beiden Steckverbinder bereits vollständig ineinandergeschoben sind.

Wenn sich die Blattfeder 50 in der in Figur 4 gezeigten zweiten stabilen Stellung befindet, beaufschlagt sie den Steckverbinder 40 über die Verschiebehülse 48 und den Anschlag 44 weg vom komplementären, am Fahrzeug angebrachten Steckverbinder 42.

Zum Ausgleich von Positionstoleranzen zwischen dem am Lenkrad angebrachten Steckverbinder 40 und dem am Fahrzeug angebrachten komplementären Steckverbinder 42 ist der Steckverbinder 40 am Lenkrad 10 "schwimmend" angebracht, kann also in einer Ebene senkrecht zur Steckrichtung verschoben werden. Durch die von der Blattfeder 50 in ihrer zweiten stabilen Stellung auf den Steckverbinder 40 ausgeübte Kraft werden Reibungskräfte beseitigt, die ansonsten von der bei der Montage wirkenden Steckkraft herrühren und die Leichtgängigkeit der schwimmenden Lagerung beeinträchtigen könnten.

## Patentansprüche

1. Lenkrad (10) mit einem Steckverbinder (40), der dafür vorgesehen ist, in einen komplementären Steckverbinder (42) eingesteckt zu werden, um ein am Lenkrad angebrachtes Bauteil anzuschließen,
**dadurch gekennzeichnet, daß** ein bistabiles Federelement (50) vorgesehen ist, das sich ausgehend vom Lenkrad zum Steckverbinder (40) erstreckt, wobei das Federelement (50) eine erste stabile Stellung einnehmen kann, in welcher es den Steckverbinder in eine Montagestellung beaufschlagt, und eine zweite stabile Stellung einnehmen kann, in der es den Steckverbinder (40) von dem komplementären Steckverbinder weg beaufschlagt, und daß der Steckverbinder (40) in Steckrichtung verschiebbar am Lenkrad angebracht ist.

2. Lenkrad nach Anspruch 1, **dadurch gekennzeichnet, daß** das Federelement eine Blattfeder (50) ist.

3. Lenkrad nach einem der Ansprüche 1 und 2, **dadurch gekennzeichnet, daß** zwei Federelemente (50) vorgesehen sind.

4. Lenkrad nach einem der vorhergehenden Ansprüche, **dadurch gekennzeichnet, daß** das Federelement (50) an einer Verschiebehülse (48) angreift, die zwischen zwei Anschlägen (44, 46) verschiebbar am Steckverbinder (40) gehalten ist.

5. Lenkrad nach einem der vorhergehenden Ansprüche, **dadurch gekennzeichnet, daß** der Steckverbinder (40) derart am Lenkrad angebracht ist, daß er in einer Ebene senkrecht zur Steckrichtung verschiebar ist.
